# EUROPEAN PATENT APPLICATION

(11) **EP 4 650 150 A1**
(43) Date of publication of application: **19.11.2025**
(21) Application number: 25185159.8
(22) Date of filing: 03.05.2021
(51) Int. Cl.: B29C 64/106, B29C 64/393, B33Y 10/00, B33Y 50/02

(54) **SYSTEM FOR RAPID OBJECT PRODUCTION USING FLOW INFILL DESIGN**

(30) Priority: 02.07.2020 US 202063047661 P
(62) Divisional of application: 21783065.2
(71) Applicant: PPG Industries Ohio, Inc., Cleveland, OH 44111 (US)
(72) Inventor: Kutchko, Cynthia, Pittsburgh, Pennsylvania, 15239 (US); Wilkinson, Bryan William, Pittsburgh, Pennsylvania, 15222 (US); Bubas, Michael Anthony, Pittsburgh, Pennsylvania, 15215 (US)
(74) Representative: f & e patent

(57) **Abstract**

A computer system for part production using flow infill design receives a computer-aided design (CAD) file that describes physical dimensions of a target object. The computer system identifies a physical boundary portion of the target object within the CAD file. The computer system generates a first tool path to additively manufacture the physical boundary portion. Additionally, the computer system sends instructions to a computer system in communication with a dispenser that cause the dispenser to implement the first tool path while dispensing a boundary material. Further, the computer system generates a command to dispense the coreactive infill material within the physical boundary portion.

## Description

This invention was made with government support under contract no. W911NF-17-2-0227 awarded by the US ARMY (US Army ACC-APG-RTP W911NF). The government has certain rights in the invention.

### BACKGROUND OF THE INVENTION

### 1. Technical Field

The present invention relates to computer control of three-dimensional printing methods that use coreactive materials.

### 2. Background and Relevant Art

Three-dimensional (3D) printing, also referred to as additive manufacturing, has experienced a technological explosion in the last several years. This increased interest is related to the ability of 3D printing to easily manufacture a wide variety of objects from common computer-aided design (CAD) files. In 3D printing, a composition is laid down in successive layers of material to build a structure. These layers may be produced, for example, from liquid, powder, paper, or sheet material.

In some conventional configurations, a 3D printing system utilizes a thermoplastic material. The 3D printing system extrudes the thermoplastic material through a heated nozzle on to a platform. Using instructions derived from a CAD file, the system moves the nozzle with respect to the platform, successively building up layers of thermoplastic material to form a 3D object. After being extruded from the nozzle, the thermoplastic material cools. The resulting 3D object is thus made of layers of thermoplastic material that have been extruded in a heated form and layered on top of each other.

### BRIEF SUMMARY OF THE INVENTION

The present invention includes a computer system for part production using flow infill design. The computer system comprises one or more processors and one or more computer-readable media having stored thereon executable instructions that when executed by the one or more processors configure the computer system to perform various acts. The computer system receives a computer-aided design (CAD) file that describes physical dimensions of a target object. The computer system also identifies a physical boundary portion of the target object within the CAD file. The physical boundary portion comprises a portion of the target object that is configured to enclose a coreactive infill material. Additionally, the computer system generates a first tool path to additively manufacture the physical boundary portion. Further, the computer system sends instructions to a computer system in communication with a dispenser that cause the dispenser to implement the first tool path while dispensing a boundary material. Further still, the computer system generates a command to dispense the coreactive infill material within the physical boundary portion.

Additionally, the present invention includes a method for part production using flow infill design. The method comprises receiving a computer-aided design (CAD) file that describes physical dimensions of a target object. The method also comprises identifying a physical boundary portion of the target object within the CAD file, wherein the physical boundary portion comprises a portion of the target object that is configured to enclose a coreactive infill material. Additionally, the method comprises generating a first tool path to additively manufacture the physical boundary portion. Further, the method comprises sending instructions to a computer system in communication with a dispenser that cause the dispenser to implement the first tool path while dispensing a boundary material. Further still, the method comprises generating a command to dispense the coreactive infill material within the physical boundary portion.

Additional features and advantages of exemplary implementations of the invention will be set forth in the description which follows, and in part will be obvious from the description, or may be learned by the practice of such exemplary implementations. The features and advantages of such implementations may be realized and obtained by means of the instruments and combinations particularly pointed out in the appended claims and clauses. These and other features will become more fully apparent from the following description and appended claims, or may be learned by the practice of such exemplary implementations as set forth hereinafter.

### BRIEF DESCRIPTION OF THE DRAWINGS

In order to describe the manner in which the above recited and other advantages and features of the invention can be obtained, a more particular description of the invention briefly described above will be rendered by reference to specific examples thereof, which are illustrated in the appended drawings. Understanding that these drawings depict only typical examples of the invention and are not therefore to be considered to be limiting of its scope, the invention will be described and explained with additional specificity and detail through the use of the accompanying drawings in which:
Figure 1 illustrates a system for rapid object production using flow infill design;
Figure 2 illustrates a schematic of a computer system for rapid object production using flow infill design;
Figure 3A illustrates a physical boundary portion of the example target object for manufacture;
Figure 3B illustrates the example target object for manufacture from Figure 3A;
Figure 3C illustrates a flow of coreactive infill material into the physical boundary portion of the example target object;
Figure 3D illustrates another flow of coreactive infill material into the physical boundary portion of the example target object;
Figure 4 illustrates a 3D printer being used for rapid object production using flow infill design; and
Figure 5 shows a flowchart of steps in a method for rapid object production using flow infill design.

### DETAILED DESCRIPTION OF THE PREFERRED EMBODIMENTS

The present invention extends to systems, methods, and apparatuses for rapid object production using flow infill design. The systems, methods, and apparatuses operate through the deposition of coreactive materials as infill during the creation of a target object. As used here, a "target object" may refer to a portion of a physical object or a complete physical object that is being, at least in part, additively manufactured by the systems, method, and/or apparatuses described here. Additionally, as used herein coreactive materials include thermoset materials.

Additive manufacturing using coreactive components has several advantages compared to alternative additive manufacturing methods. As used herein, "additive manufacturing" refers to the use of computer-aided design (through user generated files or 3D object scanners) to cause an additive manufacturing apparatus to deposit material, layer upon layer, in precise geometric shapes. Additive manufacturing using coreactive components can create stronger parts because the materials forming successive layers can be coreacted to form covalent bonds between the layers. Also, because the components have a low viscosity when mixed, higher filler content can be used. The higher filler content can be used to modify the mechanical and/or electrical properties of the materials and the built object. Coreactive components can extend the chemistries used in additively manufactured parts to provide improved properties such as solvent resistance and thermal resistance.

Additionally, the ability to use a computer system to control the use of coreactive components within an additive manufacturing environment provides several advantages. For example, the computer system is able to dynamically control and adjust the flow rates and tool paths of the coreactive components in ways that produce desired physical attributes of the resulting material. Such adjustments and control provide unique advantages within additive manufacturing.

For purposes of the following detailed description, it is to be understood that the invention may assume various alternative variations and step sequences, except where expressly specified to the contrary. Moreover, other than in any operating examples or where otherwise indicated, all numbers expressing, for example, quantities of ingredients used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

The use of the singular includes the plural and plural encompasses singular, unless specifically stated otherwise. In addition, the use of "or" means "and/or" unless specifically stated otherwise, even though "and/or" may be explicitly used in certain instances.

The term "polymer" is meant to include prepolymer, homopolymer, copolymer, and oligomer.

Embodiments of the present disclosure are directed to the production of structural objects using 3D printing. A 3D object may be produced by forming successive portions or layers of an object by depositing at least two coreactive components onto a substrate and thereafter depositing additional portions or layers of the object over the underlying deposited portion or layer. Layers are successively deposited to build the 3D printed object. The coreactive components can be mixed and then deposited or can be deposited separately. When deposited separately, the components can be deposited simultaneously, sequentially, or both simultaneously and sequentially.

Deposition and similar terms refer to the application of a printing material comprising a coreactiveting or coreactive composition and/or its reactive components onto a substrate (for a first portion of the object) or onto previously deposited portions or layers of the object. Each coreactive component may include monomers, prepolymers, adducts, polymers, and/or crosslinking agents, which can chemically react with the constituents of the other coreactive component.

The at least two coreactive components may be mixed together and subsequently deposited as a mixture of coreactive components that react to form portions of the object. For example, the two coreactive components may be mixed together and deposited as a mixture of coreactive components that react to form the coreactiveting composition by delivery of at least two separate streams of the coreactive components into a mixing apparatus such as a static mixer to produce a single stream that is then deposited. The coreactive components may be at least partially reacted by the time a composition comprising the reaction mixture is deposited. The deposited reaction mixture may react at least in part after deposition and may also react with previously deposited portions and/or subsequently deposited portions of the object such as underlying layers or overlying layers of the object.

Alternatively, the two coreactive components may be deposited separately from each other to react upon deposition to form the portions of the object. For example, the two coreactive components may be deposited separately such as by using an inkjet printing system whereby the coreactive components are deposited overlying each other and/or adjacent to each other in sufficient proximity so the two reactive components may react to form the portions of the object. As another example, in an extrusion, rather than being homogeneous, a cross-sectional profile of the extrusion may be inhomogeneous such that different portions of the cross-sectional profile may have one of the two coreactive components and/or may contain a mixture of the two coreactive components in a different molar and/or equivalents ratio.

Furthermore, throughout a 3D-printed object, different parts of the object may be formed using different proportions of the two coreactive components such that different parts of an object may be characterized by different material properties. For example, some parts of an object may be rigid and other parts of an object may be flexible.

It will be appreciated that the viscosity, reaction rate, and other properties of the coreactive components may be adjusted to control the flow of the coreactive components and/or the coreactiveting compositions such that the deposited portions and/or the object achieves and retains a desired structural integrity following deposition. The viscosity of the coreactive components may be adjusted by the inclusion of a solvent, or the coreactive components may be substantially free of a solvent or completely free of a solvent. The viscosity of the coreactive components may be adjusted by the inclusion of a filler, or the coreactive components may be substantially free of a filler or completely free of a filler. The viscosity of the coreactive components may be adjusted by using components having lower or higher molecular weight. For example, a coreactive component may comprise a prepolymer, a monomer, or a combination of a prepolymer and a monomer. The viscosity of the coreactive components may be adjusted by changing the deposition temperature. The coreactive components may have a viscosity and temperature profile that may be adjusted for the particular deposition method used, such as mixing prior to deposition and/or ink jetting. The viscosity may be affected by the composition of the coreactive components themselves and/or may be controlled by the inclusion of rheology modifiers as described herein.

It can be desirable that the viscosity and/or the reaction rate be such that following deposition of the coreactive components the composition retains an intended shape. For example, if the viscosity is too low and/or the reaction rate is too slow a deposited composition may flow in a way the compromises the desired shape of the finished object. Similarly, if the viscosity is too high and/or the reaction rate is too fast, the desired shape may be compromised.

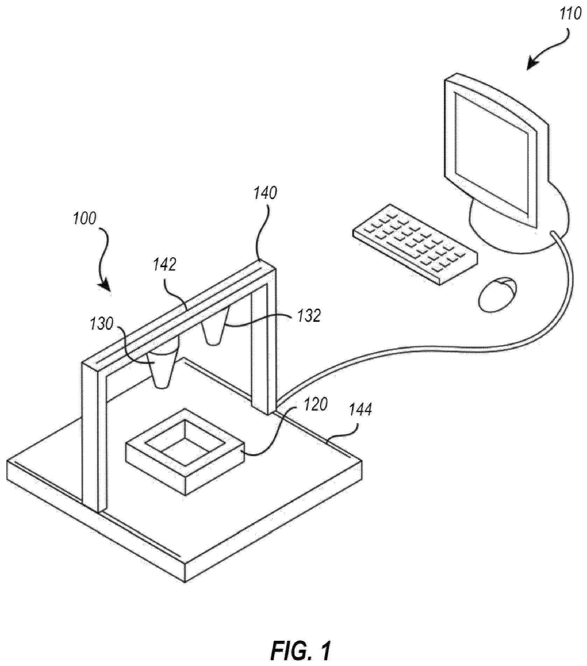

Turning now to the figures, Figure 1 illustrates a system for rapid object production using flow infill design. The depicted system comprises a 3D printer 100 in communication with a computer system 110. While depicted as a physically separate component, the computer system 110 may also be wholly integrated within the 3D printer 100, distributed between multiple different electronic devices (including a cloud computing environment), or otherwise integrated with the 3D printer 100. As used herein, a "3D printer" refers to any device capable of additive manufacture using computer-generated data files. Such computer-generated data files herein are referred to as "CAD files."

The 3D printer 100 is depicted with a target object 120 in the form of a block. The block comprises a square shaped outline that is constructed by the 3D printer 100 using, at least in part, coreactive components. The 3D printer 100 comprises a dispenser 130 that is attached to a movement mechanism 140. As used herein, a "dispenser" may comprise a dynamic nozzle, a static nozzle, injection device, a pouring device, a dispensing device, an extrusion device, a sprayer device, or any other device capable of providing a controlled flow of coreactive components. Additionally, the movement mechanism 140 is depicted as comprising the dispenser 130 attached within a track 142 that is moveable in an X-axis direction along an arm and another set of tracks 144 in which the arm is able to move in a Y-axis direction. One will appreciate, however, that this configuration is provided only for the sake of example and explanation. In additional or alternative configurations, the movement mechanism 140 may comprise any system that is capable of controlling a position of the dispenser 130 with respect to a target object 120, including, but not limited to a system that causes the target object 120 to move with respect to the dispenser 130.

As depicted, in some configurations, the 3D printer 100 comprises multiple dispensers 130, 132. The multiple dispensers may be used interchangeably or may comprise unique attributes and uses. For example, dispenser 130 may be utilized for additive manufacturing using coreactive components within a material, while dispenser 132 may be used for flowing coreactive infill materials into the target object 120. Possible combined usages of these different dispensers 130, 132 will be described in greater detail below.

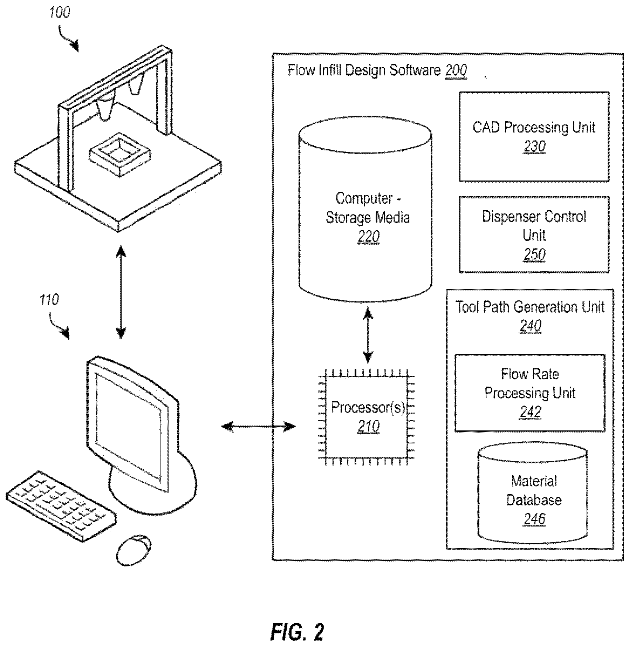

Figure 2 illustrates a schematic of a computer system 110 for rapid object production using flow infill design. The computer system 110 is shown as being in communication with a 3D printer 100. Additionally, various modules, or units, of a flow infill design software 200 are depicted as being executed by the computer system 110. In particular, the flow infill design software 200 is depicted as comprising a CAD processing unit 230, a tool path generation unit 240, a flow rate processing unit 242, a material database 246, and a dispenser control unit 250.

As used herein, a "module" comprises computer executable code and/or computer hardware that performs a particular function. One of skill in the art will appreciate that the distinction between different modules is at least in part arbitrary and that modules may be otherwise combined and divided and still remain within the scope of the present disclosure. As such, the description of a component as being a "module" is provided only for the sake of clarity and explanation and should not be interpreted to indicate that any particular structure of computer executable code and/or computer hardware is required, unless expressly stated otherwise. In this description, the terms "unit", "component", "agent", "manager", "service", "engine", "virtual machine" or the like may also similarly be used.

The computer system 110 also comprises one or more processors 210 and one or more computer-storage media 220 having stored thereon executable instructions that when executed by the one or more processors 210 configure the computer system 110 to perform various acts. For example, the computer system 110 is configured to receive a computer-aided design (CAD) file that describes physical dimensions of a target object 120. In the depicted example, the CAD processing unit 230 reads the CAD file and identifies physical dimensions for a block. The CAD file may also comprise instructions relating to the type of material and/or desired characteristics of the material that is to be used to create the block.

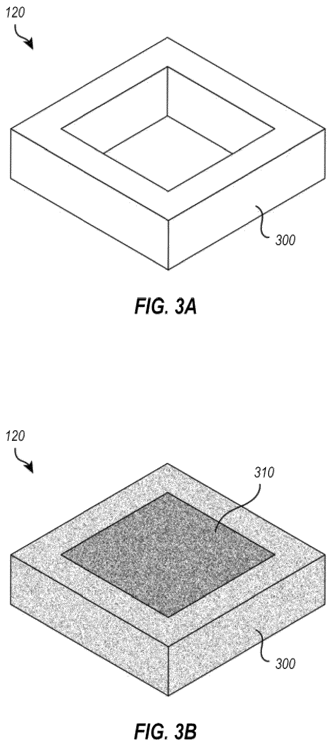

The computer system 110 is also configured to identify a physical boundary portion of the target object 120 within the CAD file. As used herein, the "physical boundary portion" comprises a portion of the target object that encloses coreactive infill material. As used herein, "coreactive infill material" comprises any material that is flowed into a physical boundary portion of the target object 120. Additionally, as used herein, "flow" or "flowed" refers to the physical deposit of the coreactive infill material into the target object 120. For example, Figure 3A illustrates a physical boundary portion 300 of the example target object 120 for manufacture. Figure 3B illustrates the example target object 120 for manufacture with the coreactive infill material 310 deposited within the physical boundary portion 300. In the depicted example, the physical boundary portion 300 comprises the outer edges of the block. In some examples, however, a physical boundary portion 300 may not necessarily comprise the outermost edges of the target object 120. For instance, a target object 120 may comprise multiple physical boundary portions that each define a different area that encloses coreactive infill material 310.

In the depicted example, the physical boundary portion 300 may comprise a coreactive material, a thermoplastic material, or any other material capable of additive manufacturing with a 3D printer 100. The same 3D printer 100 may be used for both the creation of the physical boundary portion 300 and the dispensing of the infill within the physical boundary portion 300. In such a case, the CAD processing unit 230 may already be aware of the identity and relative location of the physical boundary portion 300 within the 3D printer 100 because the 3D printer itself created the physical boundary portion 300.

Once CAD processing unit 230 has identified the physical boundary portion 300, the tool path generation unit 240 generates a first tool path to additively manufacture the physical boundary portion 300. As used herein, a "tool path" refers to the path and speed of the dispenser 130 as it manufactures the target object 120. The tool path generation unit 240 generates the first tool path such that the coreactive material is dispensed from the dispenser 130 at a rate and along a path that will create the physical boundary portion 300.

In some circumstances, the first tool path may require the dispenser 130 to layer coreactive material in layers on top of itself. The flow rate processing unit 242 and dispenser control unit 250 calculate a target flowrate to ensure that the coreactive material properly bonds between the different layers. Such calculations may account for the reactive time of the coreactive material such that the layers are placed on top of each other before lower layers have time to fully cure. As such, the generation of the first tool path may be based, at least in part, upon the target flow rate. As explained above, such information relating to the amount of time that different coreactive components remain reactive is provided by the material database 246.

The flow rate processing unit 242 may calculate a target flow rate to create the physical boundary portion 300 with the coreactive material. As used herein, the "flow rate" comprises the rate at which one or more components of the material are dispensed from a dispenser 130, 132. The flow rate may be controllable on a per-component basis. For example, the tool path generation unit 240 comprises a flow rate processing unit 242 that determines and controls the target flow rate for dispensing coreactive material to create the physical boundary portion 300 and to dispense infill coreactive material within the physical boundary portion 300.

The flow rate processing unit 242 may be configured to manipulate the flow rate of the coreactive material by changing properties of the coreactive components within the coreactive material for the physical boundary portion 300 and/or for the infill portion. It will be appreciated that the viscosity, reaction rate, and other properties of the coreactive components may be adjusted to control the flow of the coreactive components and/or the thermosetting compositions such that the deposited portions and/or the object achieves and retains a desired structural integrity following deposition. The viscosity of the coreactive components may be adjusted by the inclusion of a solvent, or the coreactive components may be substantially free of a solvent or completely free of a solvent. The viscosity of the coreactive components may be adjusted by the inclusion of a filler, or the coreactive components may be substantially free of a filler or completely free of a filler. The viscosity of the coreactive components may be adjusted by using components having lower or higher molecular weight. For example, a coreactive component may comprise a prepolymer, a monomer, or a combination of a prepolymer and a monomer. The viscosity of the coreactive components may be adjusted by changing the deposition temperature. The coreactive components may have a viscosity and temperature profile that may be adjusted for the particular deposition method used, such as mixing prior to deposition and/or ink jetting. The viscosity may be affected by the composition of the coreactive components themselves and/or may be controlled by the inclusion of rheology modifiers as described herein.

It can be desirable that the viscosity and/or the reaction rate be such that following deposition of the coreactive components the composition retains an intended shape. For example, if the viscosity is too low and/or the reaction rate is too slow a deposited composition may flow in a way the compromises the desired shape of the finished object. Similarly, if the viscosity is too high and/or the reaction rate is too fast, the desired shape may be compromised.

For example, the coreactive components that are deposited together may each have a viscosity at 25° C. and a shear rate at 0.1 s⁻¹ from 5,000 centipoise (cP) to 5,000,000 cP, from 50,000 cP to 4,000,000 cP, or from 200,000 cP to 2,000,000 cP. The coreactive components that are deposited together may each have a viscosity at 25° C. and a shear rate at 1,000 s⁻¹ from 50 centipoise (cP) to 50,000 cP, from 100 cP to 20,000 cP, or from 200 to 10,000 cP. Viscosity values can be measured using an Anton Paar MCR 301 or 302 rheometer with a gap from 1 mm to 2 mm.

Depending upon the desired properties, an infill material and a boundary material may comprise different viscosities. For example, a boundary material may comprise a higher viscosity than an infill material, such that the boundary material holds its form, while the infill material easily flows to fill a physical boundary portions defined by the boundary material. For example, an infill material may comprise a viscosity between 800 cP to 1800 cP and a boundary material may comprise a viscosity between 700 cP to 2900 cP. Additionally or alternatively, an infill material may comprise a viscosity between 300 cP to 3000 cP and a boundary material may comprise a viscosity between 500 cP to 5000 cP. Additionally or alternatively, an infill material may comprise a viscosity between 100 cP to 5000 cP and a boundary material may comprise a viscosity between 300 cP to 10000 cP.

Additionally or alternatively, the dispenser control unit 250 may adjust the characteristics of the 3D printer 100 in order to achieve a desired flow rate. For example, the dispenser control unit 250 may cause the dispenser 130 to travel faster or slower in order to achieve the desired deposition rate, viscosity, and/or reaction rate. Similarly, the dispenser control unit 250 may cause the dispenser 130 to dispense the coreactive material at higher or lower rates based upon a desired flow rate. As such, the flow rate processing unit 242 may adjust the properties of the coreactive components within the material and/or the dispenser control unit 250 may adjust the mechanical operation of the 3D printer 100 in order to achieve a desired flowrate.

In some configurations, the 3D printer 100 may be capable of utilizing multiple different types of material to manufacture the target object 120. These different materials may comprise different combination of coreactive components. As such, the tool path generation unit 240 may receive an indication of a single material or set of materials to be used as the coreactive infill material 310 and/or the material for the physical boundary portion 300 to create the target object 120. In some cases, the 3D printer 100 is preconfigured to use only a single set of coreactive components within a single material type for all additive manufacturing.

Upon receiving the indication of the material, the tool path generation unit 240 accesses from a material database 246 characteristics of the material. In some cases, the indication of the material comprises a specific mixture coreactive components. The characteristics of the material comprise a viscosity of the material and/or various other attributes relating to the reactivity of the material. Using the information from the material database 246 and the processes described above, the tool path generation unit 240 determines the target flow rate using characteristics of the material.

In some cases, the tool path generation unit 240 may receive the indication of the material to be used for the coreactive infill material 310 based upon characteristics of the material that was used to create the physical boundary portion 300. For example, the physical boundary portion 300 may comprise a material that has specific bonding characteristics. The computer system 110 may identify those bonding characteristics and communicate an indication of a material to the tool path generation unit 240 based upon those characteristics.

For instance, the physical boundary portion 300 may comprise a thermoplastic material. The computer system 110 may determine that a specific combination of coreactive components within a coreactive infill material 310 will create the strongest bond with the thermoplastic material. The computer system 110 communicates an indication of that material to the tool path generation unit 240 for generation of an appropriate tool path. Alternatively, the computer system 110 may determine that a particular combination of coreactive components within a coreactive infill material 310 will be corrosive to the thermoplastic material, and thus avoid that particular combination.

Similarly, the physical boundary portion 300 may comprise coreactive components within the boundary material. The tool path generation unit 240 may identify a particular set of coreactive components to include within the coreactive infill material 310 in order to create desired covalent bonding between the physical boundary portion 300 and the coreactive infill material 310. In some cases, an end user may desire specific performance attributes of the physical boundary portion 300 and the coreactive infill material 310. Further, the desired attributes may not be the same for the physical boundary portion 300 and the coreactive infill material 310. In such a case, the user may provide the desired coreactive components for each material and/or the tool path generation unit 240 may identify the desired coreactive components for the materials.

Additionally, in some configurations, the coreactive components may utilize an external stimulus, such as UV light during the reaction process. In such cases, the 3D printer 100 may comprise a UV light source that controllable by the computer system 110. The 3D printer 100 may be configurable to dispense the coreactive material and cure the material with a UV light source. Various other stimuli may be similarly implemented by the computer system 110 such that the stimuli are applied to the coreactive infill material during and/or after the dispensing of the coreactive infill material within the physical boundary portion 300.

Additionally, the dispenser control unit 250 may also be configured to allow the dispenser 130, 132 to coast during the first tool path. As used herein, "coast" refers to the ability of the dispenser 130 to continue along a tool path (e.g., the first tool path) while continuing to dispense coreactive material despite the 3D printer 100 no longer actively causing coreactive material to flow into the dispenser 130. The ability to coast is caused, at least in part, due to coreactive material that is within the dispenser 130 and portion of the 3D printer between the dispenser 130 and a holding container for the coreactive material. As such, when implementing the first tool path, the dispenser may dispense unwanted, excess coreactive material if it is not allowed to coast and drain the coreactive material within the system during the first tool path. Accordingly, the generation of the first tool path may comprise a portion where the dispenser is allowed to coast and continue to extrude remaining material that is within the dispenser.

Once the first tool path has been generated, the computer system 110 sends instructions to a dispenser 130, 132 that cause the dispenser 130 to implement the first tool path while flowing the boundary material to create the physical boundary portion 300. The boundary material may comprise coreactive components that are flowed in the form of the desired physical boundary portion 300 as directed by the first tool path.

The computer system 110 also generates a command to dispense the coreactive infill material 310 within the physical boundary portion 300. The command may comprise a command to an automated dispensing system or may comprise a command that is configured to cause a user interface to display an indication to pour the coreactive infill material within the physical boundary portion (such as the interface shown in Figure 1) to instruct a user to dispense the coreactive infill material 310 within the physical boundary portion 300. As used herein, an "automated dispensing system" comprises any system that is capable of receiving electronic instructions to flow the coreactive infill material 310 within the physical boundary portion 300 and then to actuate an electric-mechanical motor to cause the coreactive infill material 310 to flow.

In some examples, the tool path generation unit 240 generates a command to dispense the coreactive infill material 310 within the physical boundary portion 300 by generating a second tool path to additively manufacture an infill portion that is located at least partly within the physical boundary portion 300. The tool path generation unit 240 sends instructions to the computer system 110 in communication with the dispenser 132 that cause the dispenser to implement the second tool path while flowing coreactive infill material 310 to create the infill portion. Additionally or alternatively, the tool path generation unit 240 sends instructions to a different dispenser 132 that implements the second tool path while flowing coreactive infill material 310 to create the infill portion. As such, the automated dispensing system may comprise a 3D printer 100, a particular dispenser 132 in a 3D printer 100, or any number of other systems that are capable of flowing the coreactive infill material 310.

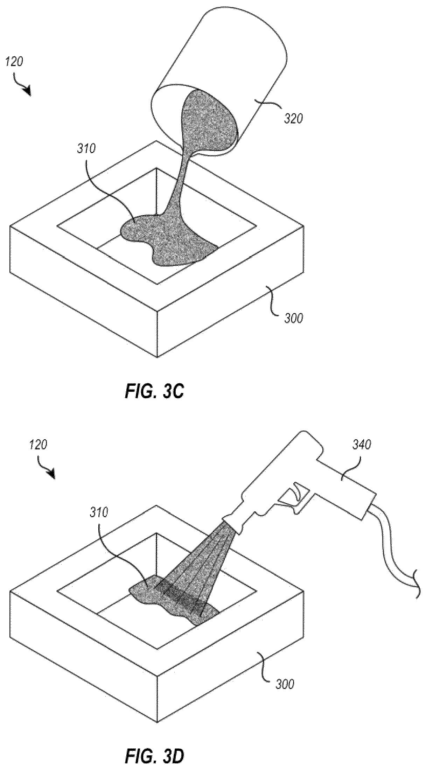

For example, Figure 3C illustrates a flow of coreactive infill material 310 into the physical boundary portion 300 of the example target object 120. The depicted example, the coreactive infill material 310 is being poured from a container 320 into the physical boundary portion 300. The container 320 may be poured by hand or may comprise a portion of a mechanical machine that is configured to pour the contents of the container 320 on command. The coreactive infill material 310 may be premeasured such that the volume of material within the container 320 matches a desired volume.

Additionally, the contents of the container 320 may be poured at substantially a single area within the physical boundary portion 300. The viscosity of the coreactive infill material 310 may cause the material to spread out and completely fill the desired area. Additionally or alternatively, the computer system 110 may provide a timer during which time the coreactive infill material must be poured into the physical boundary portion 300. The timer may be based upon the amount of time before the material in the physical boundary portion 300 cures. It may be desirable for the coreactive infill material 310 to be poured before that time to better enable the coreactive components in the coreactive infill material 310 to chemically bond with the coreactive materials in the physical boundary portion 300.

Figure 3D illustrates another flow of coreactive infill material 310 into the physical boundary portion 300 of the example target object 120. In this depicted example, the coreactive infill material 10 is being sprayed into the physical boundary portion 300 within a sprayer 340. The sprayer 340 may be hand operated or may be automated such that the sprayer 340 comprises a portion of a mechanical machine that is configured to spray the coreactive infill material 310 on command. The sprayer 340 may comprise a sensor that indicates the amount of coreactive infill material 310 that has been sprayed, such that the sprayer 340 is able to flow the correct amount of coreactive infill material 310 into the physical boundary portion 300.

Additionally, the sprayer 340 may spray the coreactive infill material 310 at substantially a single area within the physical boundary portion 300. The viscosity of the coreactive infill material 310 may cause the material to spread out and completely fill the desired area. Additionally or alternatively, the computer system 110 may provide a timer during which time the coreactive infill material must be sprayed into the physical boundary portion 300. The timer may be based upon the amount of time before the material in the physical boundary portion 300 cures. It may be desirable for the coreactive infill material 310 to be sprayed before that time to better enable the coreactive components in the coreactive infill material 310 to chemically bond with the coreactive materials in the physical boundary portion 300.

While Figures 3C and 3D provide two specific examples for flowing coreactive infill material 310 into the physical boundary portion 300, one will appreciate that these are provided for the sake of example and explanation. Various other methods may be used to flow the coreactive infill material 310 into the physical boundary portion 300 and remain within the scope of the present invention.

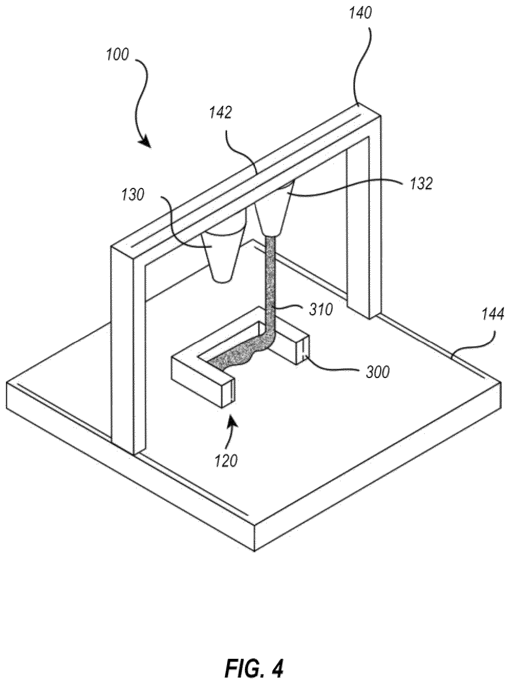

Figure 4 illustrates a 3D printer 100 being used for rapid object production using flow infill design. In the depicted example, the 3D printer 100 is additively manufacturing the physical boundary portion 300 with a first dispenser 130 and concurrently flowing coreactive infill material 310 into the physical boundary portion 300 from a second dispenser 132. As such, in some examples, the 3D printer 100 may be configured to operate two separate dispensers concurrently where one dispenser additively manufactures a physical boundary portion 300 and the other dispenser flows coreactive infill material 310 into the physical boundary portion 300.

In order to properly construct the desired target object 120, the computer system 110 calculate a viscosity of the coreactive infill material with its associated coreactive components. The computer system 110 may also calculate the speed at which the coreactive infill material would fill the physical boundary portion 300. Using this information, the computer system 110 calculates the amount of physical boundary portion 300 that must be created before the second dispenser 132 begins to flow the coreactive infill material 310 into the physical boundary portion 300. One will appreciate that failure to wait until enough of the physical boundary portion 300 is constructed before flowing the coreactive infill material 310 may cause the coreactive infill material 310 to run outside of the desired target object 120. In various configurations, the second dispenser 132 in Figure 4 may comprise a dynamic nozzle, a static nozzle, injection device, a pouring device, a dispensing device, an extrusion device, a sprayer device, or any other device capable of providing a controlled flow of coreactive components.

Returning to Figure 3B, which illustrates the completed target object 120 with the coreactive infill material 310 fully in place. The use of coreactive components to create the coreactive infill material can result in several desirable properties. For example, the coreactive infill material may be covalently bonded to the physical boundary portion 300 instead of the physical adhesion bonds that are often found in thermoplastic printing. Additionally, the results bonds within the coreactive infill material may be water tight and/or air tight.

In addition to or alternative to the above, the physical boundary portion 300 may be constructed through an additive manufacturing process using coreactive components, thermoplastic materials, and/or any other additive manufacturing. In some cases, the coreactive infill material 310 and the boundary material comprise the same composition. For example, the physical boundary portion 300 may be created from the same coreactive components as the coreactive infill material 310. Alternatively, the physical boundary portion 300 may comprise different coreactive components than the coreactive infill material 310.

Additionally, as depicted in Figure 1, the 3D printer 100 may comprise multiple separate dispensers 130, 132. The dispensers 130, 132 may be used for different types of materials, such as a dispenser for different types of coreactive materials. For example, the dispensers may dispense different coreactive components at particular flow rates in order to produce a final coreactive material that comprises a target volume mix ratio. One will appreciate, though, that similar control of the coreactive components in a material to achieve a target volume mix ratio may be practiced with a single dispenser 130. For instance, the 3D printer 100 may comprise a mixing apparatus that dynamically mixes coreactive components from different containers at a desired rate.

As stated above, the coreactive infill material 310 may comprise a mixture of two different materials, such as different reactive components. Additionally, the two different materials within the coreactive infill material 310 may be dispensed as a gradient. For example, two particular coreactive components within the coreactive infill material 310 may provide different properties based upon the volume mix ratio of the two coreactive components. As an example, the volume mix ratio of the two particular coreactive components may impact the flexibility of the resulting coreactive infill material. As such, the tool path generation unit 240 can calculate a volume mix ratio of components within the coreactive infill material 310 that changes as the coreactive infill material 310 is flowed into the physical boundary portion 300.

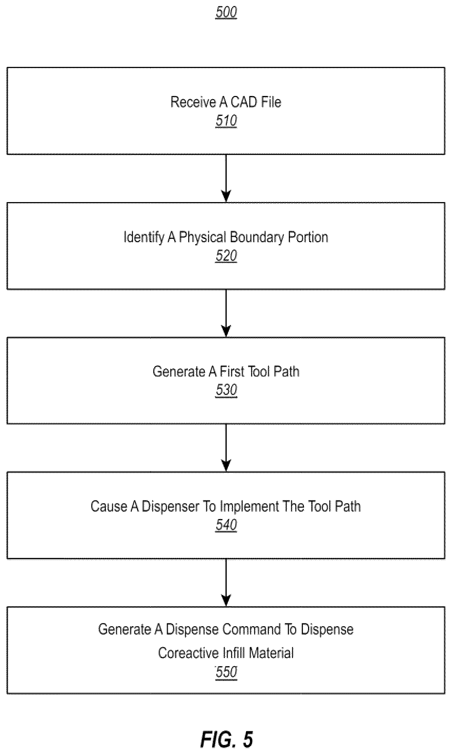

Figure 5 shows a flowchart of steps in a method 500 for rapid object production using flow infill design. The depicted method 500 includes an act 510 of receiving a CAD file. Act 510 comprises receiving, at one or more processors, a computer-aided design (CAD) file that describes physical dimensions of a target object. For example, as depicted and described with respect to Figure 2, the CAD processing unit 230 receives a CAD file of a target object 120.

Method 500 also includes an act 520 of identifying a physical boundary within the CAD file. Act 520 comprises identifying, with the one or more processors, a physical boundary portion of the target object within the CAD file, wherein the physical boundary portion comprises a portion of the target object that encloses a coreactive infill material. For example, as depicted and described with respect to Figures 2, 3B, and 3C, the CAD processing unit 230 is configured to identify a physical boundary portion 300 of the target object 120.

Additionally, method 500 includes an act 530 of generating a first tool path. Act 530 comprises generating a first tool path to additively manufacture the physical boundary portion 300. For example, as depicted and described with respect to Figure 2, the tool path generation unit 240 generates a first tool path that is configured to create the physical boundary portion 300.

Further, method 500 includes an act 540 of causing a dispenser to implement the tool path. Act 540 comprises sending instructions to a computer system 110 in communication with a dispenser 130 that cause the dispenser 130 to implement the first tool path while dispensing a boundary material. For example, as depicted in Figures 1 and 4, a dispenser 130 in the 3D printer 100 additively manufactures the physical boundary portion 300.

Further still, method 500 includes an act 550 of generating a dispense command to dispense coreactive infill material. Act 550 comprises generating a command to dispense the coreactive infill material 310 within the physical boundary portion 300. For example, as depicted and described with respect to Figures 3C, 3D, and 4, the computer system 110 communicates instructions to an electric mechanical apparatus or to an end user that indicates a command to flow coreactive infill material 310 into the physical boundary portion 300.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

The present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud-computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

A cloud-computing model can be composed of various characteristics, such as on-demand self-service, broad network access, resource pooling, rapid elasticity, measured service, and so forth. A cloud-computing model may also come in the form of various service models such as, for example, Software as a Service ("SaaS"), Platform as a Service ("PaaS"), and Infrastructure as a Service ("laaS"). The cloud-computing model may also be deployed using different deployment models such as private cloud, community cloud, public cloud, hybrid cloud, and so forth.

Some embodiments, such as a cloud-computing environment, may comprise a system that includes one or more hosts that are each capable of running one or more virtual machines. During operation, virtual machines emulate an operational computing system, supporting an operating system and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

The present invention is further specified in the following clauses.

Clause 1: A computer system for part production using flow infill design, comprising:
one or more processors; and
one or more computer-readable media having stored thereon executable instructions that when executed by the one or more processors configure the computer system to perform at least the following:
   receive a computer-aided design (CAD) file that describes physical dimensions of a target object;
   identify a physical boundary portion of the target object within the CAD file, wherein the physical boundary portion comprises a portion of the target object that is configured to enclose a coreactive infill material;
   generate a first tool path to additively manufacture the physical boundary portion;
   send instructions to a dispenser that cause the dispenser to implement the first tool path while dispensing a boundary material; and
   generate a command to dispense the coreactive infill material within the physical boundary portion.

Clause 2: The computer system of clause 1, wherein the boundary material comprises a coreactive material, preferably at least two coreactive components, preferably two coreactive components, more preferably two coreactive components that are different.

Clause 3: The computer system of clauses 1 or 2, wherein the coreactive infill material chemically bond with the boundary material, preferably coreactive components of the coreactive infill material chemically bond with coreactive components of the boundary material.

Clause 4: The computer system of any of clauses 1 to 3, wherein dispensing of the boundary material and infill material occurs simultaneously.

Clause 5: The computer system of any of clauses 1 to 4, wherein the executable instructions include instructions that are executable to configure the computer system to: calculate the speed at which the coreactive infill material fills the physical boundary portion based on the progress of additively manufacturing the physical boundary portion in order to avoid that the coreactive infill material run outside the portion of the target object that is configured to enclose a coreactive infill material and the command to dispense the coreactive infill material further includes the calculated speed at which the coreactive infill material fills the physical boundary portion.

Clause 6: The computer system of any of clauses 1 to 5, wherein the coreactive infill material is poured by hand, by a portion of a mechanical machine that is configured to pour the contents of a container on command or sprayed within the physical boundary portion.

Clause 7: The computer system of any of clauses 1 to 6, wherein the generation of the first tool path considers the viscosity and/or the reaction rate of the boundary material in order to adjust the flow rate, tool path and/or the travel speed of the dispenser along a path that will create the physical boundary so that the successive layers can be coreacted to form covalent bonds between the successive layers during the additive manufacturing of the physical boundary portion.

Clause 8: The computer system of any of clauses 1 to 7, wherein the instructions for additively manufacture the physical boundary portion send to the dispenser include the flow rate, tool path and/or travel speed for the dispenser along a path that will create the physical boundary.

Clause 9: The computer system of any of clauses 1 to 8, wherein the coreactive infill material comprises at least two coreactive components, preferably the coreactive infill material comprises a thermoset material.

Clause 10: The computer system of any of clauses 1 to 9, wherein the coreactive infill and the boundary material comprises the same coreactive components or different coreactive components.

Clause 11: The computer system of any of clauses 1 to 10, wherein the executable instructions include instructions that are executable to configure the computer system to: receiving instructions from the CAD file relating to the type of coreactive infill material and/or boundary material that is to be used to create the target object.

Clause 12: The computer system of any of clauses 1 to 11, wherein the executable instructions include instructions that are executable to configure the computer system to: receiving characteristics of the boundary material and/or the coreactive infill material, such as coreactive components of the boundary material and/or the coreactive infill material, from a material database, wherein the characteristics of the materials comprise a viscosity of the boundary material and/or the coreactive infill material, and/or the reaction rate of the boundary material and/or the coreactive infill material, preferably these information are used to generate the first and/or second tool path, particularly to generate the flow rate, tool path and/or travel speed for the dispenser along a path that will create the physical boundary.

Clause 13: The computer system of any of clauses 1 to 12, wherein the executable instructions include instructions that are executable to configure the computer system to: calculating the volume of coreactive infill material based on the volume within the physical boundary portion and the command to dispense the coreactive infill material within the physical boundary portion additional includes the calculated volume to be dispensed.

Clause 14 : The computer system of any of clauses 1 to 13, wherein the viscosity of the infill material at 25° C. and a shear rate at 0.1 s⁻¹ is from 100 to 5000 cP, preferably 300 to 3000 cP, more preferably 800 to 1800 cP, measured using an Anton Paar MCR 301 or 302 rheometer with a gap from 1 mm to 2 mm.

Clause 15: The computer system of any of clauses 1 to 14, wherein the executable instructions include instructions that are executable to configure the computer system to:
generate the command to dispense the coreactive infill material within the physical boundary portion by generating a second tool path to additively manufacture an infill portion that is located at least partly within the physical boundary portion; and
send instructions to the computer system in communication with the dispenser that cause the dispenser to implement the second tool path while flowing coreactive infill material to create the infill portion.

Clause 16: The computer system of any of clauses 1 to 15, wherein the executable instructions include instructions that are executable to configure the computer system to:
generate the command to dispense the coreactive infill material within the physical boundary portion by generating a second tool path to additively manufacture an infill portion that is located at least partly within the physical boundary portion; and
send instructions to the computer system in communication with another dispenser that cause the other dispenser to implement the second tool path while flowing coreactive infill material to create the infill portion.

Clause 17: The computer system of any of clauses 1 to 16, wherein the coreactive infill material and the boundary material comprise the same composition.

Clause 18: The computer system of any of clauses 1 to 17, wherein the coreactive infill material comprises a coreactive infill material and the boundary material comprises a thermoplastic

Clause 19: The computer system of any of clauses 1 to 18, wherein the command to dispense the coreactive infill material within the physical boundary portion comprises a command that is configured to cause a dispenser to pour the coreactive infill material within the physical boundary portion.

Clause 20: The computer system of any of clauses 1 to 19, wherein the command to dispense the coreactive infill material within the physical boundary portion comprises a command that is configured to cause a user interface to display an indication to pour the coreactive infill material within the physical boundary portion.

Clause 21: The computer system of any of clauses 1 to 20, wherein the coreactive infill material comprises a mixture of two different coreactive materials.

Clause 22: The computer system of any of clauses 1 to 21, wherein a volume mix ration of the mixture of the two different coreactive materials is varied while dispensing such that a gradient of the two different coreactive materials is created.

Clause 22: A system comprising a computer system according to clauses 1 to 22 and a 3D printer, in communication with the computer system, comprising a dispenser.

Clause 23: A method executed by one or more processors for part production using flow infill design, as in particular performing the stored executable instructions of any of clauses 1 to 22, comprising:
receiving a computer-aided design (CAD) file that describes physical dimensions of a target object;
identifying a physical boundary portion of the target object within the CAD file, wherein the physical boundary portion comprises a portion of the target object that is configured to enclose a coreactive infill material;
generating a first tool path to additively manufacture the physical boundary portion;
sending instructions to a dispenser that cause the dispenser to implement the first tool path while dispensing a boundary material; and
   generating a command to dispense the coreactive infill material within the physical boundary portion.

Clause 24: The method of clause 23, wherein the boundary material comprises a coreactive material.

Clause 25: The method of clauses 23 or 24, further comprising:
Generating the command to dispense the coreactive infill material within the physical boundary portion by generating a second tool path to additively manufacture an infill portion that is located at least partly within the physical boundary portion; and
sending instructions to the computer system in communication with the dispenser that cause the dispenser to implement the second tool path while flowing coreactive infill material to create the infill portion.

Clause 26: The method of any of clauses 23 to 25, further comprising:
generating the command to dispense the coreactive infill material within the physical boundary portion by generating a second tool path to additively manufacture an infill portion that is located at least partly within the physical boundary portion; and
sending instructions to the computer system in communication with another dispenser that cause the other dispenser to implement the second tool path while flowing coreactive infill material to create the infill portion.

Clause 27: The method of any of clauses 23 to 26, wherein the coreactive infill material and the boundary material comprise the same composition.

Clause 28: The method of any of clauses 23 to 27, wherein the coreactive infill material comprises a coreactive and the boundary material comprises a thermoplastic.

Clause 29: The method of any of clauses 23 to 28, wherein the command to dispense the coreactive infill material within the physical boundary portion comprises a command that is configured to cause a dispenser to pour the coreactive infill material within the physical boundary portion.

Clause 30: The method of any of clauses 23 to 29, wherein the command to dispense the coreactive infill material within the physical boundary portion comprises a command that is configured to cause a user interface to display an indication to pour the coreactive infill material within the physical boundary portion.

Clause 31: The method of any of clauses 23 to 30, wherein the coreactive infill material comprises a mixture of two different coreactive materials.

Clause 32: The method of any of clauses 23 to 31, wherein a volume mix ration of the mixture of the two different coreactive materials is varied while dispensing such that a gradient of the two different coreactive materials is created.

Clause 33: A computer system for part production using flow infill design, comprising: one or more processors; and one or more computer-readable media having stored thereon executable instructions that when executed by the one or more processors configure the computer system to perform at least the following: receive a computer-aided design (CAD) file that describes physical dimensions of a target object; identify a physical boundary portion of the target object within the CAD file, wherein the physical boundary portion comprises a portion of the target object that is configured to enclose a coreactive infill material; generate a first tool path to additively manufacture the physical boundary portion; send instructions to a dispenser that cause the dispenser to implement the first tool path while dispensing a boundary material; and generate a command to dispense the coreactive infill material within the physical boundary portion.

Clause 34: The computer system of clause 33, wherein the boundary material comprises a coreactive material.

Clause 35: The computer system of clause 33, wherein the executable instructions include instructions that are executable to configure the computer system to:
generate the command to dispense the coreactive infill material within the physical boundary portion by generating a second tool path to additively manufacture an infill portion that is located at least partly within the physical boundary portion; and
send instructions to the dispenser that cause the dispenser to implement the second tool path while flowing coreactive infill material to create the infill portion.

Clause 36: The computer system of clause 33, wherein the executable instructions include instructions that are executable to configure the computer system to:
generate the command to dispense the coreactive infill material within the physical boundary portion by generating a second tool path to additively manufacture an infill portion that is located at least partly within the physical boundary portion; and
send instructions to another dispenser that cause the other dispenser to implement the second tool path while flowing coreactive infill material to create the infill portion.

Clause 37: The computer system of clause 33, wherein the coreactive infill material and the boundary material comprise the same composition.

Clause 38: The computer system of clause 33, wherein the coreactive infill material comprises a coreactive infill material and the boundary material comprises a thermoplastic.

Clause 39: The computer system of clause 33, wherein the command to dispense the coreactive infill material within the physical boundary portion comprises a command that is configured to cause a particular dispenser to pour the coreactive infill material within the physical boundary portion.

Clause 40: The computer system of clause 33, wherein the command to dispense the coreactive infill material within the physical boundary portion comprises a command that is configured to cause a user interface to display an indication to pour the coreactive infill material within the physical boundary portion.

Clause 41: The computer system of clause 33, wherein the coreactive infill material comprises a mixture of two different coreactive materials.

Clause 42: The computer system of clause 33, wherein the computer system comprises a three-dimensional printer.

Clause 43: A method for part production using flow infill design, comprising when executed by one or more processors: receiving a computer-aided design (CAD) file that describes physical dimensions of a target object; identifying a physical boundary portion of the target object within the CAD file, wherein the physical boundary portion comprises a portion of the target object that is configured to enclose a coreactive infill material; generating a first tool path to additively manufacture the physical boundary portion; sending instructions to a dispenser that cause the dispenser to implement the first tool path while dispensing a boundary material; and generating a command to dispense the coreactive infill material within the physical boundary portion.

Clause 44: The method as recited in clause 43, wherein the boundary material comprises a coreactive material.

Clause 45: The method as recited in clause 43, further comprising: Generating the command to dispense the coreactive infill material within the physical boundary portion by generating a second tool path to additively manufacture an infill portion that is located at least partly within the physical boundary portion; and sending instructions to the dispenser that cause the dispenser to implement the second tool path while flowing coreactive infill material to create the infill portion.

Clause 46: The method as recited in clause 43, further comprising: generating the command to dispense the coreactive infill material within the physical boundary portion by generating a second tool path to additively manufacture an infill portion that is located at least partly within the physical boundary portion; and sending instructions to another dispenser that cause the other dispenser to implement the second tool path while flowing coreactive infill material to create the infill portion.

Clause 47: The method as recited in clause 43, wherein the coreactive infill material and the boundary material comprise the same composition.

Clause 48: The method as recited in clause 43, wherein the coreactive infill material comprises a coreactive and the boundary material comprises a thermoplastic.

Clause 49: The method as recited in clause 43, wherein the command to dispense the coreactive infill material within the physical boundary portion comprises a command that is configured to cause a particular dispenser to pour the coreactive infill material within the physical boundary portion.

Clause 50: The method as recited in clause 43, wherein the command to dispense the coreactive infill material within the physical boundary portion comprises a command that is configured to cause a user interface to display an indication to pour the coreactive infill material within the physical boundary portion.

Clause 51: The method as recited in clause 43, wherein the coreactive infill material comprises a mixture of two different coreactive materials.

Clause 52: The method as recited in clause 43, wherein a volume mix ration of the mixture of the two different coreactive materials is varied while dispensing such that a gradient of the two different coreactive materials is created.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A computer system for part production using flow infill design, comprising:
one or more processors; and
one or more computer-readable media having stored thereon executable instructions that when executed by the one or more processors configure the computer system to perform at least the following:
receive a computer-aided design (CAD) file that describes physical dimensions of a target object;
identify a physical boundary portion of the target object within the CAD file, wherein the physical boundary portion comprises a portion of the target object that is configured to enclose a coreactive infill material;
generate a first tool path to additively manufacture the physical boundary portion;
send instructions to a dispenser that cause the dispenser to implement the first tool path while dispensing a boundary material; and
generate a command to dispense the coreactive infill material within the physical boundary portion, wherein the coreactive infill material comprises a mixture of two different coreactive materials and a volume mix ration of the mixture of the two different coreactive materials is varied while dispensing such that a gradient of the two different coreactive materials is created.

2. The computer system of claim 1, wherein the boundary material comprises a coreactive material.

3. The computer system of any one of claims 1 or 2, wherein the executable instructions include instructions that are executable to configure the computer system to:
generate the command to dispense the coreactive infill material within the physical boundary portion by generating a second tool path to additively manufacture an infill portion that is located at least partly within the physical boundary portion; and
send instructions to the computer system in communication with the dispenser that cause the dispenser to implement the second tool path while flowing coreactive infill material to create the infill portion.

4. The computer system of any one of claims 1 to 3, wherein the executable instructions include instructions that are executable to configure the computer system to:
generate the command to dispense the coreactive infill material within the physical boundary portion by generating a second tool path to additively manufacture an infill portion that is located at least partly within the physical boundary portion; and
send instructions to the computer system in communication with another dispenser that cause the other dispenser to implement the second tool path while flowing coreactive infill material to create the infill portion.

5. The computer system of any one of claims 1 to 4, wherein the coreactive infill material and the boundary material comprise the same composition, and/or wherein the coreactive infill material comprises a coreactive infill material and the boundary material comprises a thermoplastic.

6. The computer system of any one of claims 1 to 5, wherein the command to dispense the coreactive infill material within the physical boundary portion comprises a command that is configured to cause a particular dispenser to pour the coreactive infill material within the physical boundary portion and/or wherein the command to dispense the coreactive infill material within the physical boundary portion comprises a command that is configured to cause a user interface to display an indication to pour the coreactive infill material within the physical boundary portion.

7. The computer system of any one of claims 1 to 6, wherein the computer system comprises a three-dimensional printer.

8. A method for part production using flow infill design, comprising when executed by one or more processors:
receiving a computer-aided design (CAD) file that describes physical dimensions of a target object;
identifying a physical boundary portion of the target object within the CAD file, wherein the physical boundary portion comprises a portion of the target object that is configured to enclose a coreactive infill material;
generating a first tool path to additively manufacture the physical boundary portion;
sending instructions to a dispenser that cause the dispenser to implement the first tool path while dispensing a boundary material; and
generating a command to dispense the coreactive infill material within the physical boundary portion, wherein the coreactive infill material comprises a mixture of two different coreactive materials and a volume mix ration of the mixture of the two different coreactive materials is varied while dispensing such that a gradient of the two different coreactive materials is created.

9. The method as recited in claim 8, wherein the boundary material comprises a coreactive material.

10. The method as recited in any one of claims 8 or 9, further comprising:
Generating the command to dispense the coreactive infill material within the physical boundary portion by generating a second tool path to additively manufacture an infill portion that is located at least partly within the physical boundary portion; and
sending instructions to the dispenser that cause the dispenser to implement the second tool path while flowing coreactive infill material to create the infill portion.

11. The method as recited in any one of claims 8 to 10, further comprising:
generating the command to dispense the coreactive infill material within the physical boundary portion by generating a second tool path to additively manufacture an infill portion that is located at least partly within the physical boundary portion; and
sending instructions to another dispenser that cause the other dispenser to implement the second tool path while flowing coreactive infill material to create the infill portion.

12. The method as recited in any one of claims 8 to 11, wherein the coreactive infill material and the boundary material comprise the same composition and/or wherein the coreactive infill material comprises a coreactive and the boundary material comprises a thermoplastic.

13. The method as recited in any one of claims 8 to 12, wherein the command to dispense the coreactive infill material within the physical boundary portion comprises a command that is configured to cause a particular dispenser to pour the coreactive infill material within the physical boundary portion and/or wherein the command to dispense the coreactive infill material within the physical boundary portion comprises a command that is configured to cause a user interface to display an indication to pour the coreactive infill material within the physical boundary portion.
